Europäisches Patentamt

European Patent Office

Office européen des brevets

(19)

(11) Publication number: **0 044 544**
**B1**

(12) **EUROPEAN PATENT SPECIFICATION**

(45) Date of publication of patent specification: **11.07.84**

(51) Int. Cl.³: **B 32 B 27/32, C 09 J 7/02**

(21) Application number: **81105640.7**

(22) Date of filing: **17.07.81**

(54) Adhesive tape.

(30) Priority: **22.07.80 JP 100228/80**

(43) Date of publication of application:
**27.01.82 Bulletin 82/4**

(45) Publication of the grant of the patent:
**11.07.84 Bulletin 84/28**

(84) Designated Contracting States:
**AT BE DE FR GB IT NL**

(56) References cited:
**GB - A - 2 024 715**
**US - A - 3 741 841**
**US - A - 3 887 745**
**US - A - 4 211 811**

(73) Proprietor: **TORAY INDUSTRIES, INC.**
**2, Nihonbashi Muromachi 2-chome Chuo-ku**
**Tokyo 103 (JP)**

(72) Inventor: **Yoshii, Toshiya**
**No. 6-9, 2-chome Seiran**
**Ohtsu-shi Shiga-ken (JP)**
Inventor: **Nakura, Satoru**
**No. 18-15, 3-chome Higashiyagura**
**Kusatsu-shi Shiga-ken (JP)**
Inventor: **Murakami, Masatsugi**
**No. 990-19, Hoshika-cho**
**Moriyama-shi Shiga-ken (JP)**

(74) Representative: **Kador . Klunker . Schmitt-Nilson .**
**Hirsch**
**Corneliusstrasse 15**
**D-8000 München 5 (DE)**

## Description

The invention relates to an adhesive tape having an adhesive layer applied to a laminated film, said film being composed of a biaxially oriented polypropylene layer (referred to as a BO-layer hereinbelow) and a polypropylene layer uniaxially transversely oriented (referred to as a UO-layer hereinbelow) the UO-layer having a thickness of 1,2 to 5,0 times the thickness of the BO-layer.

Such an adhesive tape is known (US—A—3 887 745). However the known adhesive tape has the following disadvantages:

1) insufficient hand-cutting property (i.e. the film is not easy to cut or tear off by hand)
2) lack of drawing property (i.e. the film cannot be written or drawn on)
3) clear copies cannot be made therewith.

The first disadvantage means considerable inconvenience when this kind of film is employed for home or office purposes. The difficulties in hand-cutting the adhesive tapes using the film of the above type as support material, imply some difficulty of application. So-called tape dispensers with zigzag blades are employed in many cases to cut the adhesive tape, but said dispensers do not allow for an ease of cutting greater than that by hand. In other words, those readily cut by hand are also easy to cut with the dispenser. The laminate film composed of the BO and UO layers can be cut in some way or other, but the cutting property is insufficient, and thus it is incorrectly cut in some cases, even when the dispenser is used.

As to the second disadvantage, it is often the case that one desires to write or draw on the adhesive tape after it has been stuck on, so that tapes on which letters and the like cannot be written with a pencil or ball-point pen, are clearly inconvenient.

The third disadvantage relates to the problem of copying. In many cases the film or adhesive tape is used, for example, to mend tears or breaks in printed matter to prepare it to be copied, and it is then necessary that the film or tape itself not appear in the copy, but rather the printed items therebelow should be as clearly copied as those in the non-mended portions. Therefore, any film or tape which produces a dark shadow on a copy or obscures the printed letters therebelow in the copy, is inconvenient.

US—A 4 211 811 discloses a sheet for packaging which is composed of a first BO, a second BO, an interposed adhesive layer and an interposed metallized layer. One of the two BOS can be oriented uniaxially. Also one of the BOS can be coated with a layer consisting of a propylene-ethylene block copolymer.

The adhesive tape according to the present invention is characterized in that a propylene-ethylene block copolymer layer stretched uniaxially or biaxially is laminated on the surface of said laminated film, opposite the adhesive layer the block copolymer layer having a thickness in the range between $5,0 \times 10^{-5}$ and $8,0 \times 10^{-4}$ cm and the laminated film having a thickness in the range between $1,5 \times 10^{-3}$ and $6,0 \times 10^{-3}$ cm, which propylene-ethylene block copolymer layer has an ethylene content in a range of 5 to 40% based in the weight of said copolymer.

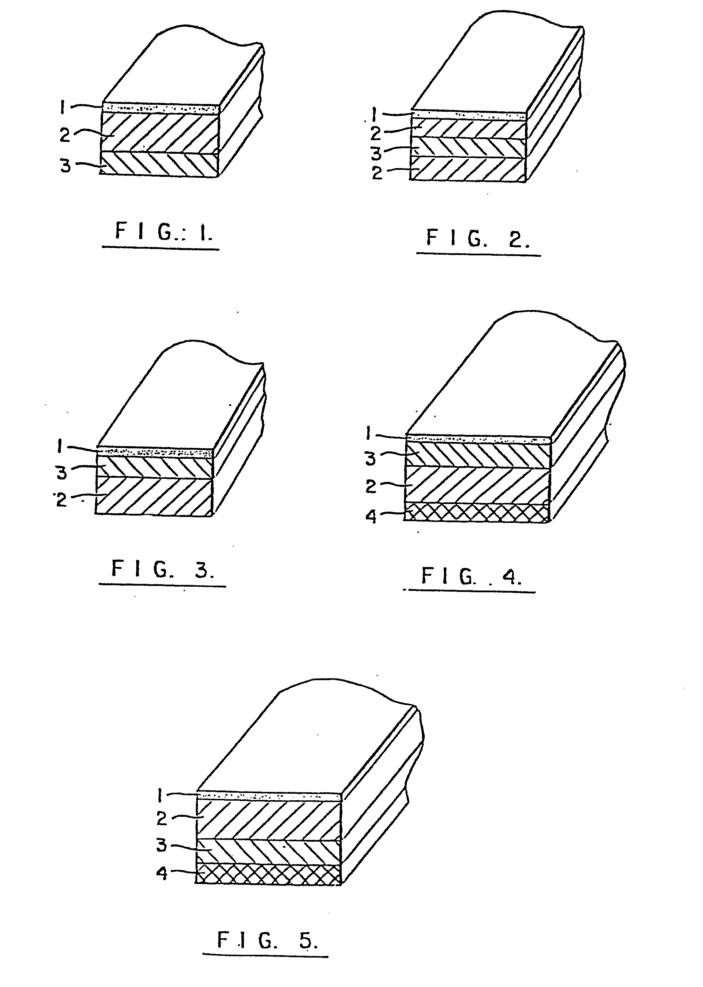

One preferred embodiment of the present invention is described hereinbelow with reference to the accompanying drawings, of which Figs. 1 to 3 are fragmentary perspective views showing, in section, the structures of improved films to which an adhesive layer is applied for making the adhesive tape according to the present invention, and Figs. 4 and 5 are fragmentary perspective views showing, in section, the structures of the adhesive tape according to the invention employing the films of Figs. 1 and 3 as a support material.

In Figs. 1 to 5 the propylene-ethylene block copolymer layer (referred to as the PEBC layer below) is represented by the numeral 1, the UO layer by 2, the BO layer by 3 and the adhesive layer by 4.

The PEBC employed in the present invention is a so-called block copolymer in which propylene and ethylene are subjected to block copolymerization. In the present invention, it is essential that the block copolymer is employed, as any random copolymer cannot provide the superior effects according to the present invention. In other words, none of the effects of the present invention such as the improved hand-cutting property, the drawing property and the suitability for copying, can be obtained by the random copolymer. The simplest way to distinguish the random copolymer from the block copolymer is to check for the presence of absorption at 720 cm$^{-1}$ attributable to ethylene in the infrared absorption spectrum of said copolymers. If the absorption at 720 cm$^{-1}$ is detected, the copolymer in question is a block copolymer. In the case of the random copolymer, only the single absorption at 731 cm$^{-1}$ resulting from the propylene chain is observed without any absorption detectable at 720 cm$^{-1}$. Needless to say, when the amount of copolymerization of ethylene is small, even the block copolymer does not show the perfect single absorption at 720 cm$^{-1}$, but sometimes presents the absorption in a shoulder-like form. Even in such a case, however, the copolymer may be considered a block copolymer, if any absorption is observable at 720 cm$^{-1}$. The block copolymer particularly suited to the present invention is one in which the ratio of the absorption A at 720 cm$^{-1}$ to the absorption B at 731 cm$^{-1}$, i.e. the value of A/B, is in the range of 0.4 to 3.0, but preferably in the range of 0.6 to 2.0. If the value A/B is smaller than those in the above range, the effect of the present invention may be reduced as the random copolymer is approached, and if the value A/B exceeds the above range, the favorable effect may also be reduced, since the influence of the ethylene chain is then excessive.

The ethylene content in the PEBC should be in the range of 5 to 40%, or even better, in the range of 10 to 30% based on the weight of the copolymer. If the ethylene content exceeds or falls short of the above range, the above-mentioned effects of the present invention are also reduced. It is to be noted here that the ethylene content in the copolymer may be measured by use of the infrared absorbtion spectrum based on the absorption ratio of 900 $cm^{-1}$ to 720 $cm^{-1}$. If fine inorganic particles with a diameter in the range of $1 \times 10^{-5}$ cm to $1 \times 10^{-3}$ cm, but preferably in the range of $5 \times 10^{-5}$ cm to $5 \times 10^{-4}$ cm, are added to the PEBC in a proportion of 5 to 40%, but preferably 10 to 30%, the hand-cutting property and drawing property are further improved. Suitable fine inorganic particles are, for example, calcium carbonate, magnesium carbonate, magnesium oxide, alumina, silica, aluminum silicate, kaolin, kaolinite, talc, clay, diatomite, dolomite, titanium oxide, zeolite. If said fine inorgnic particles are added in a proportion less than that stated above, the effect of the addition is hardly noticeable, while if the proportion exceeds that stated above, the suitability for copying is diminished.

The hand-cutting and drawing properties can be effectively improved if other polymers, for example, polyethylene, polybutene-1, poly-(4-methylpentane-1), propylene-ethylene rubber, propylene-ethylene-diene terpolymer rubber, polybutadiene, polystyrene, polyethylene terephthalate, poly-($\varepsilon$-caprolactam), etc. are mixed into the PEBC. The polymer particularly suited to being mixed into the PEBC is polyethylene, and the proportion should be in the range of 1 to 30%, but preferably in the range of 2 to 20% based on the weight of the PEBC. If this range is exceeded or fallen short of, the hand-cutting and drawing properties suffer.

The hand-cutting and drawing properties can further be improved when organic peroxides are mixed into the PEBC in the range of 0.001 to 1.0% based on the weight of the PEBC. Examples of suitable peroxides are benzoyl peroxide, t-butyl peroxybenzoate, dicumyl peroxide and lauroyl peroxide. If the amount of added organic peroxides is less than the above range, the effect of the addition is hardly noticeable, while if it exceeds the above range, difficulties arise during the formation of the film, since the melt fluidity of the PEBC tends to suffer.

In addition, it is necessary that the PEBC layer be stretched uniaxially or biaxially; otherwise the above-mentioned effects of the present invention cannot be obtained. The stretching ratio should be in the range of 3 to 12 times, but preferably in the range of 5 to 10 times in the case of uniaxial stretching, or 30 to 70 times, but preferably 40 to 60 times in the area ratio in the case of biaxial stretching.

Moreover, it is necessary that the thickness of the PEBC layer be in the range of $5.0 \times 10^{-5}$ cm to $8.0 \times 10^{-4}$ cm, but preferably in the range of $1.0 \times 10^{-4}$ cm to $5.0 \times 10^{-4}$ cm. If the thickness is smaller than the range stated, the degree of improvement of the hand-cutting and drawing properties is reduced accordingly. On the other hand, if the thickness exceeds the above range, the suitability for copying suffers.

It should be noted that the BO layer constituting the laminate film according to the present invention shows a biaxially oriented pattern in the X-ray diffraction diagram, and the refractive index thereof as measured by use of light having a wavelength of 589 m$\mu$ should have values greater than 1.501, but preferably greater than 1.505 both in the longitudinal and the transversal directions of the film.

The UO layer shows a uniaxially oriented pattern in the X-ray diffraction diagram, and the refractive index thereof as measured by use of light having a wavelength of 589 m$\mu$ should have values smaller than 1.505 in the longitudinal direction of the film, and greater than 1.510 in the transversal direction of the film.

The materials which may be employed for the BO layer are propylene homopolymer or copolymers of propylene and other $\alpha$-olefins with 2 to 10 carbon atoms. In the case of copolymers, the amount of $\alpha$-olefin subjected to the copolymerization is less than 5% based on the weight of the copolymer. If the amount of the copolymer exceeds this level, the BO layer is too soft and the laminate film then has insufficient strength. The BO layer may be supplemented with the necessary amounts (normally in the range of 0.01 to 2% based on the weight of the BO layer) of the various additives that are known to be added to polypropylene, for example, stabilizers, anti-oxidants, ultraviolet absorbers, plasticizers, antistatic agents, antiblocking agents, organic lubricants, pigments, coloring agents, nucleating agents, etc. Similarly, other kinds of polymers known to be mixed into the polypropylene, for example, polyethylene, polybutene-1, poly-(4-methylpentane-1), etc., may be mixed in a proportion of 0.1 to 5% based on the weight of the BO layer. The thickness of the BO layer should normally be in the range of $5 \times 10^{-4}$ to $2 \times 10^{-3}$ cm, but preferably in the range of $8 \times 10^{-4}$ to $1.5 \times 10^{-3}$ cm. If it is thinner than this, the strength of the laminate film is insufficient, while if it is thicker, the hand-cutting property of the laminate film suffers.

Materials to be used for the UO layer constituting the laminate film according to the present invention are propylene homopolymer to copolymers or propylene and other $\alpha$-olefins with 2 to 10 carbon atoms. In the case of copolymers, the amount of $\alpha$-olefin to be subjected to copolymerization should be less than 5% based on the weight of the copolymer. If the amount of copolymerizable $\alpha$-olefins exceeds this level, the UO layer is too soft and the hand-cutting property of the laminate film consequently suffers. As to additives and other kinds of polymers, the statements made above in connection with the BO layer also apply here. In order to prevent a curling tendency in the laminate film, polymers can be used for the UO layer which have melting points higher than those of the polymers used for the BO layer by 0.5 to 10°C. The method of measuring the melting points is disclosed in detail in US—A—3 887 745, to which reference is made. The thickness of the UO layer should be in the range of 1.2 to 5.0 times, but preferably in the range of 1.5 to 3.0 times that of the BO layer. If the UO layer is thinner than this range, the hand-cutting property of the laminate film tends to suffer, while if the UO layer is thicker than this range, the laminate film tends to stretch readily in the longitudinal direction, which results in insufficient strength. It is to be noted here that, as shown in Fig. 2, when two UO layers are present in the laminate film, the total thickness of these two layers should be regarded as the thickness of the UO layer. Furthermore, the total thickness of the laminate film according to the present invention comprising the PEBC layer, BO layer and UO layer should be in the range of $1.5 \times 10^{-3}$ cm to $6.0 \times 10^{-3}$ cm, but preferably in the range of 2.0 to $10^{-3}$ cm to $5.0 \times 10^{-3}$ cm. If the total thickness is greater than this range, the hand-cutting property suffers, while if it is less than this range, insufficient strength of the laminate film may result.

The multi-layered film according to the present invention having the structure described above can be readily cut by hand in the transverse direction, the cutting line extending only transversely in a straight line. Moreover, on the surface on the PEBC layer of this film letters and pictures, etc. may readily be written or drawn in pencil, ball-point pen or the like. The letters, pictures, etc, written or drawn on this film may be clearly copied by any diazo type or electronic copying techniques. Even if the film is stuck over printed letters or pictures that are to be copied through the film, no dark shadows or the like are caused by the film on the copies, so that clear copying is guaranteed. In this case it is necessary that the film surface contacting the printed matter should be arranged so that it is either the BO layer or the UO layer, but not the PEBC layer. If the latter is stuck against the printed matter, a dark shadow of the film itself may appear in the copy.

By providing an adhesive layer on one surface of the multi-layered film composed of the PEBC layer, BO layer and UO layer, it is possible to prepare an adhesive tape. In this case, the adhesive agent must be applied to the surface (i.e. either the BO layer or the UO layer) opposite the PEBC layer. In many cases better results may be obtained by preliminarily activating the surface which is to receive the adhesive agent by the known surface treating processes such as corona discharge. In order to increase the bonding strength between the film surface and the adhesive surface, known anchor coating agents may be applied.

The adhesive agent to be applied may be of any kind, and conventional bonding agents mainly composed of natural rubber, synthetic rubber, polyvinyl ether and acrylic ester copolymer or ethylene acetate vinyl copolymer, etc. may be employed therefor. Similarly, adhesive agents of the hot melt type or water emulsion type may also be used. The surface (i.e. the PEBC layer surface) opposite the adhesive surface need not be treated, but if required may be treated for activation, for example, by corona discharge, or be subjected to the known releasing agents. The adhesive tape obtained in the manner described above can be readily cut by hand or by a dispenser, and also has a superior drawing property and suitability for copying. It is thus not only convenient as a mending tape for writing paper or books, but is also applicable in a wide variety of home uses.

Hereinbelow a preferred embodiment for preparing the multilayered film and the adhesive tape employing said multilayered film as a support material according to the present invention is described. Firstly, the three kinds of materials to be employed therefore have the following compositions:

Material (I):
Propylene-ethylene block copolymer. Ethylene content 20%. Absorption ratio of 720 $cm^{-1}$ and 731 $cm^{-1}$ in the infrared absorption spectrum is 1.28. Contains 20% calcium carbonate in fine particles. Contains 10% low density polyethylene. Contains 0.02% benzoyl peroxide (all percentages are based on the weight of the copolymer).

Material (II):
Propylene homopolymer. Melt fluidity index as measured under the conditions L of ASTM D1238—73 is 2.5 g/10 minutes. Melting point 168°C.

Material (III):
Propylene homopolymer. Melt fluidity index is 5.5 g/10 minutes. Melting point 169.2°C.

A sheet composed of two layers is produced by coextruding the above materials (I) and (II). The sheet thus prepared is stretched 5.0 times in the longitudinal direction while being heated at 130°C. Subsequently the material (III) is subjected to melt extrusion onto the surface of the material (II) for lamination. The three-layered sheet thus prepared is fed into a stenter to be stretched 9 times in the transverse direction while being heated at 155°C, and is then subjected to heat treatment for 5 seconds at 158°C before being cooled and wound. The resultant three-layered film is constructed in such a way that the material (I) forms the PEBC layer, the material (II) in the middle forms the BO layer and the material (III) on the opposite surface forms the UO layer. As to the thickness of the respective layers, the PEBC layer is $3.0 \times 10^{-4}$ cm, the BO layer $1.0 \times 10^{-3}$ cm and the UO layer $2.7 \times 10^{-3}$ cm, the total thickness being $4.0 \times 10^{-3}$ cm. This film can be readily cut by hand and the transverse direction, has a superior drawing property and is also suitable for copying.

To produce an adhesive tape, the surface of the UO layer of the above film is treated by corona discharge, an anchor coating agent mainly composed of a mixture of melamin-formaldehyde resin and alkyd resin is applied thereto, after a drying period an adhesive agent mainly composed of a copolymer with acrylic groups is further applied thereto, and it is finally dried to be wound onto a paper core. By slicing the wound roll into ring-shaped pieces 1.27 cm in width, the adhesive tape is obtained. Since this adhesive tape can easily be cut by hand or with a dispenser, and also has a superior drawing property and suitability for copying, it is conveniently used as a melting tape for office and home purposes, and also as a sealing tape for diverse purposes. Hereinbelow, examples are given to illustrate the present invention.

Example 1

The following three kinds of materials were prepared. (The percentages are based on the weight of each material).

Material (I):

Propylene-ethylene block copolymer. Ethylene content 23%. Absorption ratio of 720 $cm^{-1}$ and 731 $cm^{-1}$ in the infrared absorption spectrum is 1.36. Melt fluidity index as measured under the conditions L of ASTM D1238—73 is 5.5 g/10 minutes. Contains the following anti-oxidant and plasticizer:

    2,6-di-tert-butyl-p-cresol: 0.25%
    Irganox 1010 (manufactured by Ciba-Geigy Ltd.): 0.05%
    Calcium stearate: 0.20%

Material (II):

Propylene homopolymer. Melt fluidity index 3.0 g/10 minutes. Melting point 168.2°C. Contains the same anti-oxidant and plasticizer as material (I).

Material (III):

Propylene homopolymer. Melt fluidity index 7.2 g/10 minutes. Melting point 169.7°C. Contains the following additives in addition to the same anti-oxidant and plasticizer as in material (I):

    Monoglyceride of stearic acid: 0.8%
    N,N-dihydroxyethyl stearylamine: 0.2%
    Stearylamide: 0.25%
    Kaolinite in fine particles (average particle diameter $1.5 \times 10^{-4}$ cm): 0.08%

Materials (I) and (II) were fed into separate extruders to be melted at 260°C, and both of the molten materials were directed into a sheet-forming die in which the two molten polymers were combined so as to be discharged from the die in the form of a two-layered sheet. The molten sheet was cooled and solidified on a drum having a surface temperature of 30°C. The two-layered sheet was heated by preheating rollers at 120°C, and then stretched 4.8 times in the longitudinal direction while being rapidly heated by an infrared heater. On the surface of the above uniaxially stretched sheet on the side of the material (II), the material (III) melted at 280°C was laminated by extrusion, and thus a three-layered sheet was obtained. The three-layered sheet thus prepared was fed into a stenter type lateral stretcher, and after being stretched 9.0 times in the transverse direction while being heated at 156°C it was directed into a heat treating chamber kept at 158°C for 5 seconds of heat treatment, whereby relaxation of 8% in the transverse direction was permitted so that it could then be slowly cooled down to room temperature.

The total thickness of the three-layered film thus obtained was $4.0 \times 10^{-3}$ cm including the PEBC layer of $3 \times 10^{-4}$ cm composed of the material (I), the BO layer of $9 \times 10^{-4}$ cm composed of the material (II) and the UO layer of $2.8 \times 10^{-3}$ cm composed of the material (III). The surface of the PEBC layer of this film was cloudy or opaque, the average surface roughness (HCLA) as measured by the method described in ASA B46 1—1962 being $5.8 \times 10^{-5}$ cm (note that the cut-off during the measurement was 0.25 mm).

On this surface letters and the like could be written or drawn by pencil or ball-point pen, and these letters could also be clearly copied by diazo type copying machines, etc. Even when the film was stuck over printed matter, with the UO surface of said film contacting said printed matter, it did not interfere with the copying, so that clear copies were obtained. The Charpy impact strength, which is the parameter showing the degree of the hand-cutting property of this film, was 6.6 $kg \cdot cm/mm^2$ during cutting in the transverse direction. (If the Charpy impact strength exceeds 12 $kg \cdot cm/mm^2$, the film is difficult to cut by hand. If the impact strength is in the range of 9 to 12 $kg \cdot cm/mm^2$, the film can be cut by hand somehow or other, but is not as easy to cut as cellophane and acetate films. If the impact strength is in the range of 5 to 8 $kg \cdot cm/mm^2$, the film is very easy to cut and has good processability. However, if the value is less than 4 $kg \cdot cm/mm^2$, the film is brittle, although it is readily cut, and thus it is not suitable for practical application. Therefore, the desirable values for the Charpy impact strength are in the range of 5 to 8 $kg \cdot cm/mm^2$).

The film thus prepared was treated on both surfaces by corona discharge so as to obtain the surface wetting tension of 40 dyne/$cm^2$. Subsequently, a solution of the anchor-coating agent mainly composed of acrylonitrilebutadiene-styrene copolymer and polyterpene resin in an organic solvent was applied to the UO surface to be dried by a heated air flow of 60°C. The next step was to apply a releasing agent solution (a toluene solution of the reaction product of N-octadecyl isocyanate and polyvinyl alcohol) to the surface of the PEBC layer to be dried similarly at 60°C. Thereafter, a solution of the adhesive agent mainly composed of a copolymer of isooctyl acrylate and acrylic acid in an organic solvent was applied to the anchor coating agent, and after drying at 60°C the film was wound onto a paper core.

The film thus wound was then sliced into ring-shaped pieces together with the paper core, and thus the adhesive tape of 1.27 cm in width was obtained. The Charpy impact strength when the above tape was cut in the transverse direction was 6.0 kg·cm/mm², and the tape could readily be cut by hand or by a dispenser having a zigzag blade. On the non-adhesive side of this tape, letters and the like could easily be written by pencil or ball-point pen, and they could also be copied effectively. Furthermore, even when the torn portion of printed matter mended with this tape was subjected to copying, the dark shadow of the tape was not noticeable on the copy, so that clear copies were obtained.

## Comparative Example 1

A laminate film $4.0 \times 10^{-3}$ cm in thickness composed of a BO layer and a UO layer was prepared in exactly the same manner as in Example 1, except that the PEBC layer was removed from the film of Example 1. (The thickness of the BO layer was $1.2 \times 10^{-3}$ cm and the thickness of the UO layer was $2.8 \times 10^{-3}$ cm). Using this film as the support material, adhesive tapes were prepared in the same manner as in Example 1. Accordingly, the above comparative example may be regarded as similar to the method disclosed in US—A—3 887 745 referred to earlier. The Charpy impact strength during cutting in the transverse direction of this tape was 9.5 kg·cm/mm², which reveals a hand-cutting property which is considerably inferior to the tape of Example 1 of the present invention. Moreover, the above tape lacked the drawing property and was also inferior in its suitability for copying.

## Comparative Example 2

An adhesive tape was prepared under the same conditions as in Example 1, except that the PEBC (block copolymer) for the material (I) in Example 1 was replaced by propylene-ethylene random copolymer (absorption ratio of 720 cm⁻¹ and 731 cm⁻¹ in the infrared absorption spectrum is 0). The Charpy impact strength of this tape was 11.5 kg·cm/mm², and the handcutting property of the tape was considerably inferior. Moreover, this tape lacked the drawing property and had inferior suitability for copying.

## Example 2

The following three kinds of materials were prepared (the % indications are based on the weight of each material):

Material (I):

Propylene-ethylene block copolymer. Ethylene content 20%. Absorption ratio of 720 cm⁻¹ and 731 cm⁻¹ in the infrared absorption spectrum is 1.15. Melt fluidity index is 6.5 g/10 minutes. Contains the following additives:

Low density polyethylene: 8%

Aluminum silicate in fine particles (average particle diameter $1.6 \times 10^{-4}$ cm): 20%

Dicumyl peroxide: 0.02%

Magnesium oxide: 0.05%

2,6-di-tert-butyl-p-cresol: 0.25%

Inganox 1010 (manufactured by Ciba-Geigy Ltd.): 0.05%

Calcium stearate: 0.20%

Material (II):

Propylene homopolymer. Melt fluidity index 25 g/10 minutes. Melting point 168°C. Contains the following additives:

Monoglyceride of stearic acid: 0.6%

N,N-dihydroxyethyl stearylamine: 0.15%

Oleic amide: 0.10%

2,6-di-tert-butyl-p-cresol: 0.25%

Irganox 1010 (manufactured by Ciba-Geigy Ltd.): 0.05%

Calcium stearate: 0.20%

Material (III):

Propylene homopolymer. Melt fluidity index 7.5 g/10 minutes. Melting point 169.8°C. Contains 0.1% of zeolite in fine particles (average particle diameter $1.8 \times 10^{-4}$ cm) in addition to the same additives as in the material (II).

The material (II) was fed into the extruder for melt extrusion at 280°C into a sheet-like form, and was then wound onto a rotary drum having a surface temperature of 40°C for cooling and solidification. The sheet thus prepared was heated up to 130°C to be stretched 5.0 times in the longitudinal direction so as to to be formed into a uniaxially stretched sheet. The materials (I) and (III) were subjected to melt extrusion onto the upper and lower surface, respectively, of the above sheet for lamination to form the three-layered sheet, which was then fed into the stenter type lateral stretcher, and stretched 9.2 times in the transverse direction while being heated at 153°C. The film thus treated was fed into the heat treating chamber for heat treatment at 155°C for 4 seconds, allowing 10% relaxation in the transverse direction, and then directed into a cooling chamber kept at 20°C for gradual cooling. The resulting three-layered film had a total thickness of $3.5 \times 10^{-3}$ cm, including the PEBC layer of $3 \times 10^{-4}$ cm

composed of the material (I), the BO layer of $8 \times 10^{-4}$ cm composed of the material (II) and the UO layer of $2.4 \times 10^{-3}$ cm composed of the material (III). The surface of the PEBC layer of this film was cloudy or opaque, with the average surface roughness (HCLA) being $7.0 \times 10^{-5}$ cm. On this surface, letters and the like could be written or drawn by pencil or ball-point pen, and these letters could be clearly copied by diazo type copying machines, etc. Even when the film was stuck onto printed matter with the UO surface of said film contacting the printed matter, it did not interfere with copying, thus providing clear copies. The Charpy impact strength during cutting of this film in the transverse direction was 5.9 kg·cm/mm², and an extremely favorable hand-cutting property was observed. The UO surface of the above film was treated by corona discharge in a nitrogen atmosphere and then treated with a toluene solution mainly composed of atactic polypropylene and butyl rubber for subsequent drying in a heated air flow at 80°C. Thereafter, an adhesive agent mainly composed of pale crepe and polyterpene was applied thereonto, and the resulting film was wound onto a paper core after being dried in a heated air flow at 80°C. The film thus wound was sliced together with the paper core into ring-shaped pieces so as to obtain the adhesive tape 1.27 cm in width. The tape had a Charpy impact strength of 5.6 kg·cm/mm², and could be readily cut by hand or by a dispenser. On the non-adhesive side of this tape, letters and the like could be easily written or drawn, and these could be readily copied. Moreover, even when the torn portion of printed matter mended with this tape was subjected to copying, no dark shadow of the tape was observed on the copy, so that clear copies were obtained.

Although the present invention has been described in detail with reference to the accompanying drawings, it should be noted that various modifications will be apparent to those skilled in the art.

## Claims

1. An adhesive tape having an adhesive layer (4) applied to a laminated film, said film being composed of a biaxially oriented polypropylene layer (3) and a polypropylene layer (2) uniaxially transversely oriented the uniaxially transversely oriented polypropylene layer (2) having a thickness of 1,2 to 5,0 times the thickness of the biaxially oriented polypropylene layer (3), characterized in that a propylene-ethylene block copolymer layer (1) stretched uniaxially or biaxially is laminated on the surface of said laminated film, opposite the adhesive layer, the block copolymer layer (1) having a thickness in the range between $5,0 \times 10^{-5}$ and $8,0 \times 10^{-4}$ cm and the laminated film having a thickness in the range between $1,5 \times 10^{-3}$ and $6,0 \times 10^{-3}$ cm, which propylene-ethylene block copolymer layer (1) has an ethylene content in the range of 5 to 40% based on the weight of said copolymer.

2. An adhesive tape as in claim 1 characterized in that said propylene-ethylene block copolymer layer contains inorganic fine particles in the range of 5 to 40% based on the weight of said copolymer.

3. An adhesive tape as in claim 1 or 2 characterized in that said propylene-ethylene block copolymer layer contains polyethylene in the range of 10 to 30% based on the weight of said copolymer.

4. An adhesive tape as in any of claims 1 to 3, characterized in that said propylene-ethylene block copolymer layer contains organic peroxide in the range of 0.001 to 1.0% based on the weight of said copolymer.

## Patentansprüche

1. Klebeband mit einer auf einer kaschierten Folie angebrachten Klebeschicht (4), wobei die Folie aus einer biaxial orientierten Polypropylenschicht (3) und einer uniaxial querorientierten Polypropylenschicht (2) besteht und die Dicke der uniaxial querorientierten Polypropylenschicht (2) 1,2 bis 5,0 mal größer als die Dicke der biaxial orientierten Polypropylenschicht (3) ist, dadurch gekennzeichnet, daß eine uniaxial oder biaxial gedehnte Propylen-Ethylen-Blockcopolymerschicht (1) auf die der Klebeschicht gegenüberliegende Fläche der kaschierten Folie kaschiert ist, wobei die Dicke der Blockcopolymerschicht (1) im Bereich zwischen $5,0 \times 10^{-5}$ und $8,0 \times 10^{-4}$ cm und die Dicke der kaschierten Folie im Bereich zwischen $1,5 \times 10^{-3}$ und $6,0 \times 10^{-3}$ cm liegen und der Ethylengehalt der Propylen-Ethylen-Blockcopolymerschicht (1) im Bereich zwischen 5 und 40% bezogen auf das Gewicht des Copolymers liegt.

2. Klebeband nach Anspruch 1, dadurch gekennzeichnet, daß die Propylen-Ethylen-Blockcopolymerschicht anorganische feine Teilchen im Bereich von 5 bis 40% bezogen auf das Gewicht des Copolymers enthält.

3. Klebeband nach Anspruch 1 oder 2, dadurch gekennzeichnet, daß die Propylen-Ethylen-Blockcopolymerschicht Polyethylen im Bereich von 10 bis 30% bezogen auf das Gewicht des Copolymers enthält.

4. Klebeband nach einem der Ansprüche 1 bis 3, dadurch gekennzeichnet, daß die Propylen-Ethylen-Blockcopolymerschicht organisches Peroxid im Bereich von 0,001 bis 1,0% bezogen auf das Gewicht des Copolymers enthält.

## Revendications

1. Un ruban adhésif avec une couche adhésive (4) disposée sur une feuille laminée, cette feuille se composant d'une couche (3) de polypropylène orientée biaxialement et d'une couche (2) de polypropylène orientée uniaxialement transversalement, la couche (2) de polypropylène orientée uniaxialement transversalement ayant une épaisseur de 1,2 à 5,0 fois l'épaisseur de la couche (3) de polypropylène orientée biaxialement, caractérisé en ce qu'une couche (1) de copolymérisat en masse de propylène et d'éthylène dilatée uniaxialement ou biaxialement est laminée sur la surface de ladite feuille laminée qui est en face de la couche adhésive, la couche (1) de copolymérisat en masse ayant une épaisseur dans le domaine entre $5{,}0 \times 10^{-5}$ et $8{,}0 \times 10^{-4}$ cm et la feuille laminée ayant une épaisseur dans le domaine entre $1{,}5 \times 10^{-3}$ et $6{,}0 \times 10^{-3}$ cm, et la couche (1) de copolymérisat en masse de propylène et d'éthylène ayant un contenu d'éthylène dans le domaine entre 5 et 40% par rapport au poids dudit copolymère.

2. Un ruban adhésif selon la revendication 1, caractérisé en ce que ladite couche de copolymérisat en masse de propylène et d'éthylène contient de fines particules inorganiques dans le domaine entre 5 et 40% par rapport au poids dudit copolymère.

3. Un ruban adhésif selon la revendication 1 ou 2, caractérisé en ce que ladite couche de copolymérisat en masse de propylène et d'éthylène contient du polyéthylène dans le domaine entre 10 et 30% par rapport au poids dudit copolymère.

4. Un ruban adhésif selon l'une des revendications 1 à 3, caractérisé en ce que ladite couche de copolymérisat en masse de propylène et d'éthylène contient du péroxide organique dans le domaine entre 0,001 et 1,0% par rapport au poids dudit copolymère.

FIG.: 1.

FIG. 2.

FIG. 3.

FIG. .4.

FIG. 5.